# FASCICULE DE BREVET EUROPEEN

(11) **EP 1 890 900 B1**
(45) Date de publication et mention de la délivrance du brevet: **14.04.2010**
(21) Numéro de dépôt: 06794435.5
(22) Date de dépôt: 17.05.2006
(51) Int. Cl.: B60K 17/356, F16H 61/44

(54) **DISPOSITIF DE SELECTION DE LA CYLINDREE GLOBALE D'UN CIRCUIT HYDRAULIQUE**
VORRICHTUNG ZUM WÄHLEN EINER HYDRAULIKKREIS-GESAMTLEISTUNG
DEVICE FOR SELECTING A HYDRAULIC CIRCUIT OVERALL CAPACITY

(30) Priorité: 18.05.2005 FR 0504969
(43) Date de publication de la demande: 27.02.2008
(73) Titulaire: POCLAIN HYDRAULICS INDUSTRIE, 60411 Verberie (FR)
(72) Inventeur: HEREN, Jean, F-60490 La Neuville Sur Ressons (FR)
(74) Mandataire: Intes, Didier Gérard André
(86) Numéro de dépôt international: PCT/FR2006/050451
(87) Numéro de publication internationale: WO 2007/000534

(56) Documents cités:
- EP-A- 0 294 662
- EP-A- 0 916 542
- US-A- 3 900 075
- US-A- 5 199 525

## Description

La présente invention concerne un dispositif de sélection de la cylindrée globale d'un circuit hydraulique comprenant un premier groupe moteur qui comprend au moins un premier moteur hydraulique pour l'entraînement d'un premier moyen de déplacement d'un véhicule et un deuxième groupe moteur comprenant au moins un deuxième moteur hydraulique pour l'entraînement d'un deuxième moyen de déplacement du véhicule, lesdits premier et deuxième moyens de déplacement étant situés l'un à la suite de l'autre dans un sens de déplacement du véhicule, le circuit comprenant des premier et deuxième conduits principaux pour le premier groupe moteur, ainsi que des troisième et quatrième conduits principaux pour le deuxième groupe moteur, les premier et troisième conduits principaux d'une part et les deuxième et quatrième conduits principaux d'autre part étant aptes à être reliés à deux orifices respectifs d'une pompe pour l'alimentation et l'échappement des groupes moteurs en parallèle, le dispositif comprenant un sélecteur apte à occuper une première position stable correspondant à une première configuration du dispositif de sélection dans laquelle une liaison respective entre les troisième et quatrième conduits principaux et les orifices respectifs de la pompe et un isolement entre ces troisième et quatrième conduits sont établis de telle sorte que le deuxième groupe moteur est actif, et à occuper une deuxième position stable correspondant à une deuxième configuration du dispositif de sélection dans laquelle la liaison de l'un des premier et deuxième conduits principaux avec les troisième et quatrième conduits principaux est établie, de telle sorte que le deuxième groupe moteur est inactif, le sélecteur étant tel que, lors d'un déplacement de ce sélecteur entre lesdites positions stables, il existe une situation provisoire dans laquelle les premier, deuxième, troisième et quatrième conduits principaux sont reliés.

Un dispositif de ce type est connu par US 5,199,525.

Le circuit auquel s'applique l'invention est en particulier le circuit d'entraînement d'un véhicule à deux essieux moteurs auxquels sont respectivement attelés les premier et deuxième groupes moteurs.

Chacun des groupes moteurs peut avoir une cylindrée unique. Dans ce cas, lorsque les deux groupes moteurs sont alimentés en parallèle, la cylindrée globale maximale du circuit hydraulique est la somme des cylindrées de ces deux groupes moteurs. Lorsque, le dispositif de sélection étant dans sa deuxième configuration, le deuxième groupe moteur est inactif, la cylindrée globale du circuit correspond à celle du premier groupe moteur qui reste actif.

Bien entendu, l'invention s'applique également au cas où au moins l'un des groupes moteurs a une cylindrée variable. En particulier, le premier groupe moteur peut avoir deux cylindrées distinctes de fonctionnement, tandis que le deuxième groupe moteur aurait une cylindrée unique. Dans ce cas, le circuit peut avoir trois cylindrées globales distinctes :
- une cylindrée globale maximale lorsque le premier groupe moteur est en grande cylindrée et que le dispositif de sélection de la cylindrée globale est dans sa première configuration de sorte que les deux groupes moteurs sont actifs ;
- une cylindrée globale intermédiaire lorsque le premier groupe moteur est en grande cylindrée mais que, le dispositif étant dans sa deuxième configuration, le deuxième groupe moteur est inactif ;
- une cylindrée globale minimale lorsque le premier groupe moteur est en petite cylindrée et que le deuxième groupe moteur est toujours inactif.

Bien entendu, des combinaisons différentes peuvent être envisagées, par exemple une autre cylindrée intermédiaire dans laquelle le premier et le deuxième groupe moteur sont actifs, mais le premier groupe moteur est en petite cylindrée.

Les moyens de déplacement du véhicule peuvent être tous moyens connus tels que des roues, des chenilles, une bille...

Par "groupe moteur", il faut comprendre un groupe d'au moins un moteur attelé à un moyen de déplacement. Par exemple, si les moyens de déplacement sont des roues, et si chaque essieu a deux roues, chaque groupe moteur peut soit comprendre un moteur unique entraînant les deux roues du même essieu, ou bien deux moteurs respectivement attelés à chacune de ces deux roues et alimentés en parallèle. Chaque moteur peut être de tout type connu en soi, par exemple être constitué par un moteur à une seule cylindrée ayant deux orifices servant respectivement à l'alimentation et à l'échappement, ou bien par un moteur à deux cylindrées distinctes, constituées de deux sous-moteurs ayant chacun un orifice d'alimentation et un orifice d'échappement, ou bien encore un moteur à deux cylindrées distinctes, constitué de deux sous-moteurs ayant un premier orifice commun, d'échappement ou d'alimentation et ayant chacun un deuxième orifice d'alimentation ou d'échappement distinct, les orifices distincts étant aptes à être reliés, l'un à un orifice de la pompe, l'autre à un orifice d'un récepteur raccordé sur le même circuit. De tels moteurs sont dits moteurs à trois orifices, et sont décrits dans EP 0 547 947.

L'invention s'applique à des circuits d'entraînement de véhicules ayant un sens préférentiel ou n'ayant pas de sens préférentiel. Pour des véhicules ayant un sens préférentiel (marche avant), on fait en sorte que celui des premier et deuxième conduits principaux avec lequel les troisième et quatrième conduits principaux sont mis en communication pour rendre inactif le deuxième groupe moteur soit le conduit principal qui sert à l'échappement du premier groupe moteur dans ce sens de fonctionnement préférentiel du véhicule.

En effet, pour un tel véhicule, le sens non préférentiel, c'est-à-dire la marche arrière, correspond à un déplacement à faible vitesse dans lequel le dispositif de sélection de la cylindrée globale du circuit n'est normalement pas utilisé.

Pour l'entraînement d'un véhicule sans sens préférentiel de fonctionnement, le circuit peut être équipé d'une valve permettant, pour l'inactivation du deuxième groupe moteur, de sélectionner celui des premier et deuxième conduits principaux qui est à la plus basse pression et de le relier aux troisième et quatrième conduits principaux.

La situation provisoire dans laquelle les premier, deuxième, troisième et quatrième conduits principaux sont reliés au cours du passage du sélecteur entre ces deux positions stables sert à éviter un blocage de ce sélecteur et un blocage de l'alimentation du deuxième groupe moteur. Dans cette situation provisoire, tous les conduits principaux communiquent entre eux et le véhicule est en roue libre.

Les deux groupes moteurs étant alimentés par la même pompe, le passage d'une cylindrée globale à l'autre provoque un choc dans l'entraînement du véhicule. En effet, pour un débit donné de la pompe, le couple total délivré par les groupes moteurs est plus élevé mais leur vitesse est plus lente dans la situation de grande cylindrée globale, que dans la situation de petite cylindrée globale. En conséquence, lorsque le dispositif de sélection passe de sa première à sa deuxième configuration, le circuit passe en petite cylindrée globale et il se produit un choc d'accélération. Lorsque, à l'inverse, le dispositif de sélection passe de sa deuxième configuration vers sa première configuration, il se produit un choc de freinage. Celui-ci peut être évité ou atténué par l'opérateur si, en même temps qu'il commande le passage du dispositif de sa deuxième vers sa première configuration, il augmente rapidement le débit de fluide délivré par la pompe. La commande d'une telle augmentation est délicate et ne peut être automatisée que par l'utilisation d'un dispositif relativement coûteux.

Lors du passage du dispositif de la sélection globale de la cylindrée dans sa deuxième configuration, le deuxième groupe moteur est inactivé, de sorte que les moyens d'entraînement attelés à ce deuxième groupe cessent évidemment d'être moteurs. Ainsi, le véhicule est alors seulement entraîné par les moyens d'entraînement attelés au premier groupe moteur qui est actif, mais dont la vitesse augmente brutalement. Sur certains types de sol, cette augmentation brutale de la vitesse peut occasionner une perte d'adhérence, nuisible à la conduite du véhicule. De même, lors du passage de la deuxième configuration à la première, les moyens de déplacement sont brutalement entraînés à une vitesse réduite. Ce choc peut également occasionner une perte d'adhérence et, les moyens d'entraînement des deux essieux étant seulement synchronisés par le sol, cette perte d'adhérence peut occasionner une perte de synchronisation également nuisible à la conduite du véhicule et à la maîtrise de sa trajectoire.

Comme indiqué précédemment, la situation provisoire dans laquelle les premier, deuxième, troisième et quatrième conduits principaux sont reliés, sert à éviter un blocage du dispositif. Jusqu'à présent, pour des circuits dans lesquels les deux groupes moteurs entraînent des essieux distincts, on a toujours cherché à faire en sorte que cette situation provisoire soit aussi brève que possible.

EP 0 294 662 propose de désactiver l'un des groupes moteur d'un circuit en reliant ses conduits principaux au réservoir, ce qui permet de faire fonctionner ce groupe moteur en roue libre par la rentrée des pistons dans les cylindres. Une situation provisoire, dans laquelle les différents conduits principaux communiquent entre eux, est générée à l'aide d'un sélecteur dont le déplacement est contrôlé.

L'invention vise un contexte différent, dans lequel le groupe moteur désactivé n'est pas mis en roue libre par la rentrée des pistons dans les cylindres mais par une mise en court-circuit (ou bipasse), ses conduits principaux étant reliés ensemble et à l'un des conduits principaux de l'autre groupe moteur. Par ailleurs, EP 0 294 662 ne permet pas d'éviter les chocs en fin de déplacement du tiroir car, dans la situation intermédiaire, le groupe moteur qui était inactivé ou qui est destiné à l'être ne délivre pas de couple.

L'invention a pour but de remédier au phénomène de choc constaté lors du changement de cylindrée globale d'un circuit du type indiqué en préambule, ou tout au moins d'atténuer ce phénomène.

Ce but est atteint grâce au fait que le dispositif de sélection selon l'invention comprend des moyens pour, au moins dans un sens de déplacement du sélecteur entre ses première et deuxième positions stables, entretenir pour un laps de temps ladite situation provisoire selon une phase intermédiaire au cours de laquelle une liaison entre les troisième et quatrième conduits principaux et une liaison entre au moins l'un des premier et deuxième conduits principaux et au moins l'un des troisième et quatrième conduits principaux sont restreintes.

Ainsi, avec l'invention, on maintient la situation provisoire pour permettre un échange de débit de fluide entre les conduits principaux et éviter ainsi une variation brusque de ce débit. Les moteurs ne sont pas totalement désactivés dans cette situation provisoire puisque les liaisons précitées sont restreintes dans cette situation, de sorte que les conduits principaux ne communiquent pas librement entre eux.

Grâce à la restriction de la liaison entre les troisième et quatrième conduits principaux dans la phase intermédiaire, le deuxième groupe moteur délivre alors un couple limité qui dépend de la perte de charge due à cette restriction. Il en résulte que lorsque le sélecteur termine son déplacement, l'augmentation ou la diminution du couple total délivré par les groupes moteur est beaucoup plus faible que dans l'art antérieur précité, et n'est donc pas brutale, ce qui permet d'éviter l'effet de choc.

En particulier, on entretient la situation provisoire lors du déplacement du sélecteur entre sa deuxième et sa première position, c'est-à-dire lors d'un déplacement de ce sélecteur conduisant à augmenter la cylindrée globale du circuit. Par exemple, si les premier et deuxième groupes moteurs servent à entraîner respectivement les roues des premier et deuxième essieux d'un véhicule de 5 t se déplaçant à une vitesse de l'ordre de 10 km/h au changement de cylindrée et si les couples délivrés par les moteurs respectivement en petite et en grande cylindrée globale sont respectivement de 1 500 N.m et 3 000 N.m, le laps de temps pendant lequel la situation provisoire est entretenue peut être de l'ordre de 3/10^{ème} de seconde à 5/10^{ème} de seconde, voire de l'ordre de 1 s. Il en est de même pour deux groupes de moteurs entraînant chacun l'un des groupes d'organes de déplacement d'un engin de 24 t (soit 12 t par groupe moteur) à une vitesse de l'ordre de 3 km/h au moment du changement de cylindrée, les couples délivrés par les groupes moteurs respectivement en petite et en grande cylindrée étant respectivement de 2 000 N.m et de 4 000 N.m. Pour entretenir la situation provisoire, le déplacement du sélecteur peut être ralenti ou freiné, voire sensiblement stoppé pendant le laps de temps nécessaire.

On peut choisir de mettre en oeuvre l'invention de manière à limiter le choc seulement dans un sens de passage de la valve d'une position à l'autre, par exemple lors du passage de la petite cylindrée à la grande cylindrée.

On peut également choisir de limiter le choc dans les deux sens de passage, en faisant en sorte que, dans ces deux sens, existe une phase intermédiaire comme indiqué ci-dessus. Comme on le verra dans la suite, on peut choisir que, dans cette phase intermédiaire, la section d'au moins l'un des passages entre les première et troisième voies et entre les deuxième et troisième voies soit réduite, tandis que la section de l'autre passage permettrait une circulation de fluide sensiblement libre. On peut également choisir que les sections de ces deux passages soient restreintes
ou calibrées, en étant différentes.

Avantageusement, pendant la phase intermédiaire, la liaison entre les troisième et quatrième conduits principaux et la liaison entre au moins l'un des premier et deuxième conduits principaux et au moins l'un des troisième et quatrième conduits principaux présentent des sections restreintes différentes.

Par exemple, la liaison entre les troisième et quatrième conduits principaux est moins restreinte que la liaison entre au moins l'un des premier et deuxième conduits principaux et au moins l'un des troisième et quatrième conduits principaux.

Avantageusement, le sélecteur est une valve à au moins trois voies, comprenant une première, une deuxième et une troisième voie, respectivement reliées au premier, au deuxième et au troisième conduit principal, et le dispositif comprend des moyens pour relier le deuxième et le quatrième conduit principal, les premier et deuxième conduits principaux étant respectivement reliés au premier et au deuxième orifices de la pompe.

Dans ce cas, on peut choisir d'entretenir la phase intermédiaire lors du passage de la deuxième à la première position, c'est-à-dire lors du passage de la petite cylindrée à la grande cylindrée globale du circuit, en faisant en sorte que, dans cette phase intermédiaire, le passage entre la troisième et la deuxième voie forme une restriction tandis que le passage entre la première et la troisième voie est sensiblement libre ou, tout au moins, est moins restreint que le passage entre la troisième et la deuxième voie.

Dans ce cas, si l'on considère que le véhicule est en marche avant et que le premier conduit principal est raccordé à l'alimentation en fluide, la mise en communication entre la première et la troisième voie fait augmenter la cylindrée devant être alimentée, de sorte que la pression a tendance à baisser dans le premier conduit principal d'alimentation, cette baisse étant compensée par un gavage. Dans le même temps, la mise en communication partielle entre la deuxième et la troisième voie, par l'intermédiaire de la restriction précitée, limite l'augmentation de la pression dans le deuxième conduit principal, qui sert à l'échappement. En effet, la restriction occasionne une perte de charge. Ceci permet de gérer l'apparition d'une contre-pression dans ce conduit et de maîtriser en conséquence le freinage du véhicule.

Le déplacement du véhicule étant ralenti dans la phase intermédiaire, la mise en communication restreinte entre la deuxième et la troisième voie se poursuit le temps nécessaire à ce que l'énergie cinétique du véhicule soit consommée par l'effet de freinage des moteurs.

Avantageusement, la valve présente une quatrième voie reliée au quatrième conduit principal et, dans la première position stable du sélecteur, les première et troisième voies d'une part et les deuxième et quatrième voies d'autre part sont reliées deux à deux tandis que dans la deuxième position stable du sélecteur, les troisième et quatrième voies sont reliées entre elles et à l'une des première et deuxième voies en étant isolées de l'autre des première et deuxième voies et que, dans la situation provisoire, les première et troisième voies sont reliées par un premier passage présentant une première restriction, les deuxième et quatrième voies sont reliées par un deuxième passage présentant une deuxième restriction et un passage supplémentaire présentant une restriction supplémentaire existe entre la première et la deuxième voie ou entre la troisième et la quatrième voie.

Lorsque le sélecteur est une valve de ce type, son branchement aux premier et troisième conduits principaux d'une part et aux deuxième et quatrième conduits principaux d'autre part est analogue.

Avantageusement, le dispositif de sélection comprend des moyens de commande d'un déplacement du sélecteur entre lesdites positions stables dans lequel ladite situation provisoire existe aptes à commander une première étape de déplacement rapide entre la position stable initiale du sélecteur et une position correspondant au début de la phase intermédiaire et une étape de déplacement freiné pendant laquelle se déroule la phase intermédiaire.

Avantageusement, les moyens de commande sont aptes à commander, en outre, une deuxième étape de déplacement rapide vers l'autre position stable, à l'issue de la phase intermédiaire.

Ainsi, le déplacement du sélecteur est ralenti juste pendant le déroulement de la phase intermédiaire, sans que les autres phases de déplacement de ce sélecteur ne soient ralenties, ce qui permet d'éviter un temps de passage trop important d'une position à l'autre.

Par exemple, la vitesse de déplacement du sélecteur durant la phase intermédiaire est tout au plus égale au tiers de sa vitesse de déplacement pendant la première étape de déplacement rapide. Par exemple, le ralentissement est tel que la durée de la phase intermédiaire est au moins égale au deux tiers de la durée totale du déplacement du sélecteur entre ses deux positions extrêmes.

De préférence, le sélecteur est une valve comprenant un tiroir mobile dans un alésage, le tiroir étant apte à occuper deux positions opposées correspondant respectivement à la première et à la deuxième position stable du sélecteur et, au cours de son déplacement entre ces deux positions opposées, à occuper une position intermédiaire correspondant à ladite situation provisoire.

Les moyens de commande du déplacement du sélecteur peuvent être hydrauliques, électroniques, ou bien une combinaison de moyens hydrauliques et électroniques. Lorsqu'ils sont présents, les moyens électroniques comprennent avantageusement un servomécanisme. Ces moyens de commande peuvent être du type décrit dans EP 1 058 002 ou WO 01/61186.

Ainsi, le dispositif de sélection comprend avantageusement des moyens de commande d'un déplacement du sélecteur entre lesdites positions stables dans lequel ladite situation provisoire existe aptes à asservir une variable représentative du fonctionnement du véhicule selon une consigne à l'aide du déplacement commandé du sélecteur entre lesdites deux positions.

La variable représentative est de préférence déterminée à partir d'au moins l'un des paramètres constitués par la pression dans au moins l'un des conduits principaux, le débit dans au moins l'un des conduits principaux, le couple de sortie d'au moins l'un des moteurs, le nombre de tours de la sortie d'au moins l'un des moteurs, la vitesse du véhicule, la position par rapport à une cible, la distance par rapport à une cible, l'accélération ou la décélération du véhicule, l'accélération ou la décélération d'au moins l'un des moteurs, un paramètre de fonctionnement de la pompe, la puissance consommée, un paramètre de fonctionnement d'un moteur annexe entraînant cette pompe et un paramètre de fonctionnement d'un outil alimenté hydrauliquement à partir du circuit.

Avantageusement, les moyens de commande du déplacement du sélecteur comprennent des moyens de commande électroniques et le dispositif comprend des moyens pour mesurer la valeur d'au moins un paramètre critique, calculer la valeur de la variable représentative et pour commander le déplacement du sélecteur de l'une vers l'autre des ses positions stables en fonction de la valeur de la variable représentative calculée.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- la figure 1 montre schématiquement un circuit hydraulique comprenant un dispositif de sélection de la cylindrée conforme à l'invention, selon un premier mode de réalisation dans lequel le sélecteur de ce dispositif est une valve à trois voies ;
- la figure 2 montre schématiquement un circuit hydraulique comprenant un dispositif de sélection de la cylindrée globale selon un deuxième mode de réalisation de l'invention, dans lequel le dispositif comprend un sélecteur qui est une valve à quatre voies ; et
- les figures 3 à 6 montrent en coupe axiale schématique le sélecteur du dispositif de la figure 2, dans quatre situations distinctes.

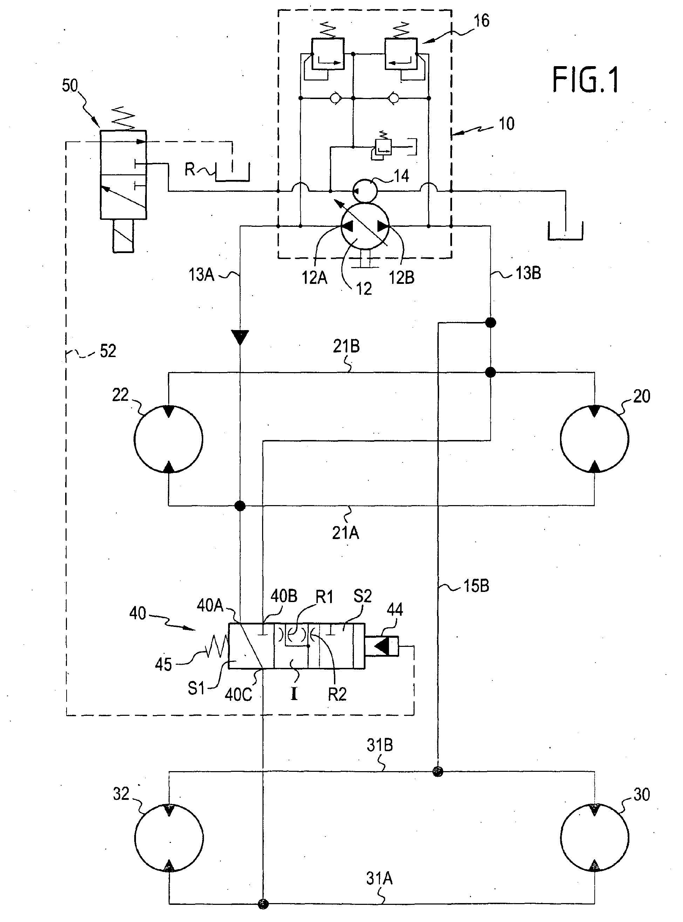

Le circuit représenté sur la figure 1 sert à l'entraînement en translation d'un véhicule à deux essieux ayant chacun une paire de roues motrices.

Ce circuit comprend un bloc pompe 10 avec une pompe principale 12, une pompe de gavage 14 et des dispositifs de limiteur de pression 16 classiques. Le circuit étant de type fermé, chacun des deux orifices de la pompe principale 12 est relié à une conduite qui, selon le sens d'entraînement de la pompe, sert à l'alimentation ou à l'échappement.

Le premier groupe moteur comprend deux moteurs, respectivement 20 et 22, respectivement pour l'entraînement des roues droite et gauche du premier essieu du véhicule. Le deuxième groupe moteur comprend deux moteurs, respectivement 30 et 32, pour l'entraînement respectif des roues droite et gauche du deuxième essieu.

Le circuit comprend un premier et un deuxième conduit principal, respectivement 21A et 21B, auxquels les moteurs 20 et 22 du premier groupe sont reliés en parallèle. Ainsi, si l'on considère que les orifices 12A et 12B de la pompe servent respectivement au refoulement et à l'aspiration, de sorte que les conduites 13A et 13B respectivement raccordées à ces orifices servent respectivement à l'alimentation et à l'échappement, le premier conduit principal 21A, qui est relié à la conduite 13A, sert à l'alimentation des moteurs 20 et 22, tandis que le deuxième conduit principal 21B, qui est relié à la conduite 13B sert à l'échappement de ces moteurs.

De même, le circuit comporte un troisième conduit principal 31A et un quatrième conduit principal 31B auxquels les moteurs 30 et 32 du deuxième groupe sont reliés en parallèle. Dans le premier mode de réalisation représenté sur la figure 1, le quatrième conduit principal 31B est relié en permanence au deuxième conduit principal 21B, par une conduite de liaison 15B externe au sélecteur 40.

Le circuit comprend un dispositif de sélection de sa cylindrée globale qui, selon sa configuration, peut rendre actifs ou inactifs les moteurs du deuxième groupe.

Ce dispositif comprend un sélecteur 40 qui, dans le premier mode de réalisation représenté sur la figure 1 est une valve à trois voies, dont la première voie 40A est reliée au premier conduit principal 21A, dont la deuxième voie 40B est reliée au deuxième conduit principal 21B et dont la troisième voie 40C est reliée au troisième conduit principal 31A. La figure 1 montre la valve 40 dans sa première position stable S1, dans laquelle les première et troisième voies 40A et 40C sont reliées en étant isolées de la deuxième voie 40B. Dans la mesure où, par ailleurs, le deuxième conduit principal 21B et le quatrième conduit principal 31B sont reliés, cette première position S1 de la valve du sélecteur 40 permet une liaison en parallèle des groupes moteurs sur les orifices de la pompe.

La valve 40 est apte à occuper une deuxième position stable S2 dans laquelle sa deuxième et sa troisième voie 40B et 40C sont reliées en étant isolées de la première voie 40A. Dans ce cas, le deuxième groupe moteur est court-circuité puisque les troisième et quatrième conduits principaux 31A et 31B sont reliés entre eux. En effet, le troisième conduit principal 31A est relié au deuxième conduit principal 21B par la liaison entre les voies 40B et 40C et, comme on l'a indiqué précédemment, le quatrième conduit principal 31B est également relié au deuxième conduit principal 21B.

Dans la première position S1 de la valve 40, le deuxième groupe moteur est au contraire actif puisque le troisième conduit principal 31A est relié à l'orifice 12A de la pompe du fait de sa liaison avec le premier conduit principal, par la liaison entre les voies 40A et 40C de la valve, le quatrième conduit principal 31B étant quant à lui relié en permanence au deuxième orifice 12B de la pompe étant isolée du troisième conduit principal puisque la deuxième voie 40B de la valve est isolée des deux autres.

Entre ces deux positions stables S1 et S2 de la valve, qui sont ses positions extrêmes, il existe une position intermédiaire I qui correspond à une situation provisoire dans laquelle les trois voies 40A, 40B et 40C sont reliées entre elles, reliant ainsi les premier, deuxième et troisième conduits principaux. Dans la mesure où, par ailleurs, les deuxième et quatrième conduits principaux sont en permanence reliés entre eux, les quatre conduits principaux 21A, 21B, 31A et 31B sont reliés entre eux dans cette situation provisoire. On voit toutefois que des restrictions R1 et R2 sont respectivement disposées sur la liaison entre la première voie 40A et la troisième voie 40C et sur la liaison entre la deuxième voie 40B et la troisième voie 40C.

La valve 40 est en particulier du type comprenant un tiroir mobile dans un alésage, apte à occuper deux positions opposées correspondant respectivement aux premières et aux deuxièmes positions stables S1 et S2, tandis que la position intermédiaire I est occupée par ce tiroir au cours de son déplacement entre ses deux positions opposées.

Dans l'exemple représenté sur la figure 1, les moyens de commande du déplacement de ce tiroir sont des moyens de commande hydrauliques, avec une électrovalve 50 qui est apte à relier une conduite de pilotage 52 soit à la pompe de gavage 14, soit à un réservoir sans surpression R, cette conduite de pilotage alimentant une ou plusieurs chambres de commande 44 de la valve 40. Les moyens de commande comprennent également un ressort de rappel 45.

Selon l'invention, la situation provisoire I correspondant à la position intermédiaire du tiroir de la valve 40 est maintenue pendant un laps de temps, selon une phase intermédiaire du déplacement de ce tiroir entre ses positions extrêmes, ceci au moins pour un sens de déplacement.

En référence au deuxième mode de réalisation, on décrira dans la suite des exemples pour les moyens de commande hydrauliques permettant la réalisation de cette phase intermédiaire.

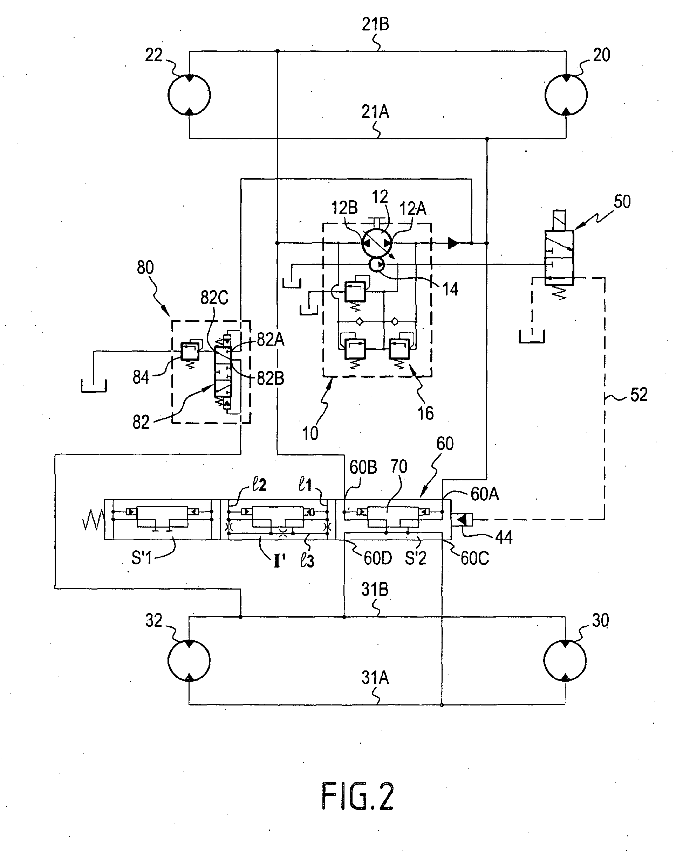

On décrit maintenant le deuxième mode de réalisation de l'invention, en référence à la figure 2. Le circuit que représente cette figure sert également à l'entraînement en translation d'un véhicule ayant deux essieux avec chacun deux roues motrices. On reconnaît ainsi le bloc pompe 10, avec la pompe principale 12 et ses deux orifices 12A, 12B, ainsi que la pompe de gavage 14 et les limiteurs de pression 16. On reconnaît également les deux moteurs du premier groupe, 20 et 22, ainsi que le premier conduit principal 21A qui est relié à l'orifice 12A et qui alimente en parallèle les moteurs 20 et 22, et que le deuxième conduit principal 21B qui est relié au deuxième orifice 12B de la pompe et permet l'échappement en parallèle des moteurs 20 et 22.

On reconnaît également les moteurs 30 et 32 du deuxième groupe ainsi que le troisième conduit principal 31A et le quatrième conduit principal 31B qui servent à l'échappement et à l'alimentation en parallèle de ces moteurs 30 et 32.

Pour la sélection de la cylindrée globale du circuit, celui-ci comporte encore un sélecteur 60 qui, dans ce deuxième mode de réalisation, est une valve à quatre voies : une première voie 60A reliée en permanence au premier conduit principal 21A, une deuxième voie 60B reliée en permanence au deuxième conduit principal 21B, une troisième voie 60C reliée en permanence au troisième conduit principal 31A et une quatrième voie 60D reliée en permanence au quatrième conduit principal 31B.

En l'espèce, le sélecteur est équipé d'une valve 70 de sélection de la basse pression ou navette dont la fonction sera expliquée dans la suite.

Le sélecteur 60 est apte à occuper une première position stable S'1
dans laquelle les voies 60A et 60C d'une part et les voies 60B et 60D d'autre part communiquent deux à deux. Ainsi, lorsque le sélecteur est dans cette première position stable, les groupes moteurs 20 et 22 d'une part, et 30 et 32 d'autre part sont reliés en parallèle à la pompe 12.

Le sélecteur 60 peut également occuper une deuxième position stable S'2 dans laquelle il est représenté sur la figure 2. Dans cette position, les voies 60B, 60C et 60D communiquent entre elles, tandis que la voie 60A est isolée des autres voies. Ainsi, le premier groupe moteur 20, 22 fonctionne normalement puisque les premier et deuxième conduits principaux 21A et 21B sont respectivement raccordés aux deux orifices de la pompe en étant isolés l'un de l'autre, tandis que le deuxième groupe moteur 30, 32 est inactif puisque les troisième et quatrième conduits principaux 31A et 31B sont reliés entre eux et sont, en espèce, également reliés au deuxième conduit principal 21B.

Dans sa deuxième position stable S'2, le sélecteur 60 permet de relier celui des premier et deuxième conduits principaux 21A et 21B qui est à la plus basse pression avec les troisième et quatrième conduits principaux 31A et 31B. Ceci est réalisé grâce à la présence de la valve de sélection de la basse pression 70.

Ce sélecteur peut encore occuper une position intermédiaire I',
dans laquelle ses quatre voies 60A, 60B, 60C et 60D sont reliées entre elles par des restrictions. Comme on l'a indiqué précédemment, cette position intermédiaire permet de relier au moins l'un des premier et deuxième conduits principaux 21A et 21B aux conduits principaux 31A et 31B qui sont par ailleurs reliés entre eux. Dans la position intermédiaire, les première et troisième voies 60A, 60C sont reliées par un premier passage I1 ayant une première restriction, les deuxième et quatrième voies 60B, 60D sont reliées par un deuxième passage 12 présentant une deuxième restriction et les troisième et quatrième voies 60C, 60D sont reliées par un passage supplémentaire 13 présentant une restriction supplémentaire. En variante, ce passage supplémentaire pourrait être entre les première et deuxième voies 60A, 60B.

Le circuit représenté sur la figure 2 comprend également un dispositif d'échange 80 qui permet de prélever du fluide sur l'un des conduits principaux et de le ramener au réservoir afin d'éviter les échauffements de fluide dans le circuit, le prélèvement de fluide étant compensé par la pompe de gavage.

Le dispositif d'échange 80 comprend un sélecteur d'échange 82 qui, de manière classique, présente deux voies d'entrée, respectivement 82A et 82B. Classiquement, de tels sélecteurs ont leurs deux voies d'entrée respectivement relié à chacun des deux conduits principaux d'une même boude d'un circuit servant respectivement à l'alimentation et à l'échappement d'un groupe moteur. Ainsi, il serait classique de respectivement relier les voies 82A et 82B aux conduits principaux 21A et 21B. En effet, le sélecteur met en relation celle de ses voies d'entrée qui est à la plus basse pression avec sa voie de sortie 82C, de manière à prélever du fluide sur celui des conduits principaux qui est à la plus basse pression.

Toutefois, dans le circuit de la figure 2, les deux voies d'entrée 82A et 82B du sélecteur 82 sont respectivement reliées au premier conduit principal 21A d'une part et au quatrième conduit principal 31B d'autre part.

Lorsque le sélecteur 60 est dans sa première position stable S'1, les deux groupes moteurs sont alimentés en parallèle, de sorte que l'un des premier et quatrième conduits principaux sert à l'alimentation tandis que l'autre sert à l'échappement. Le sélecteur 82 prélève donc le fluide sur les conduits principaux à la basse pression.

Lorsque, en revanche, le sélecteur 60 est dans sa deuxième position stable S'2, ou bien le premier conduit principal 21A sert à l'alimentation, auquel cas la voie 60A du sélecteur est isolée des trois autres voies qui sont reliées entre elles, de sorte que le quatrième conduit principal est notamment relié au deuxième conduit principal 21B et est donc à la pression d'échappement, auquel cas le sélecteur 82 sélectionne la liaison de sa deuxième voie d'entrée 82B avec sa voie de sortie 82C, et c'est bien à partir de la pression d'échappement que se fait l'échange. Ou bien, au contraire, le premier conduit principal sert à l'échappement, de sorte que la voie 60A est reliée aux voies 60C et 60D par la navette 70. Dans ce cas, les premier et quatrième conduits principaux sont tous les deux sensiblement à la pression d'échappement et les deux voies d'entrée 82A et 82B sont donc reliées à une pression voisine de la pression d'échappement. Dans ce cas, ou bien le sélecteur 82 occupe sa position neutre dans laquelle toutes les voies sont isolées les unes des autres, ou bien il adopte l'une de ces deux positions extrêmes en reliant soit la voie 82A, soit la voie 82B à la voie de sortie 82C, selon les éventuelles légères différences de pression aux voies 82A et 82B.

En tout état de cause, l'échange fonctionne normalement lorsque le premier conduit principal 21A sert à l'alimentation comme indiqué précédemment. Si le véhicule possède un sens préférentiel de fonctionnement, on choisira de faire en sorte que ce sens corresponde au cas où le premier conduit principal 21A sert à l'alimentation.

L'échange qui est alors mis en oeuvre prélève du fluide sur le quatrième conduit principal et donc sur les conduits principaux by-passés du deuxième groupe moteur. Ceci permet d'éviter l'échauffement du fluide de cet essieu by-passé.

De manière classique, le dispositif d'échange 80 comprend un limiteur de pression 84 situé à la sortie du sélecteur 82, de manière à ne permettre un échange effectif que lorsque la pression de fluide est suffisante.

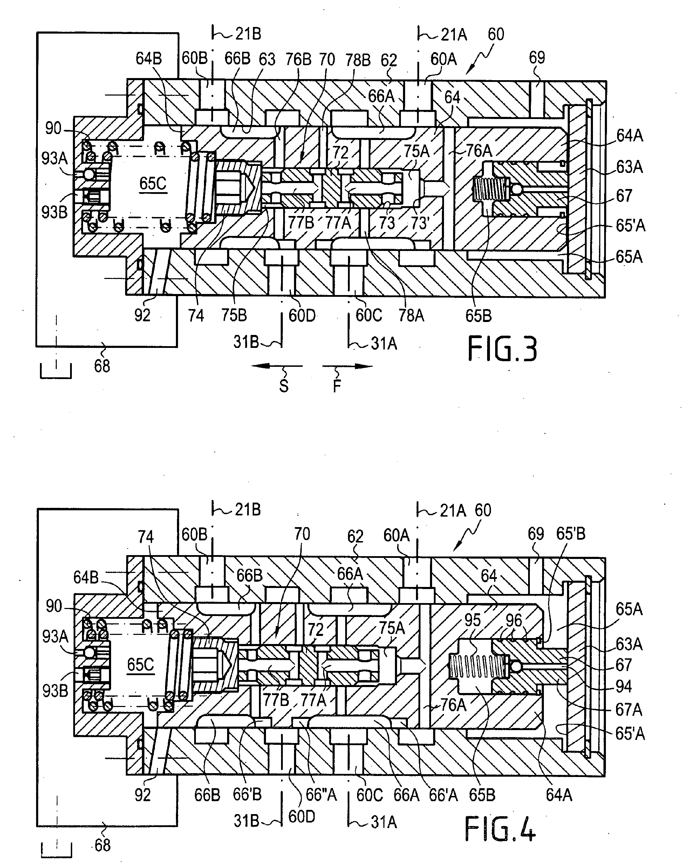

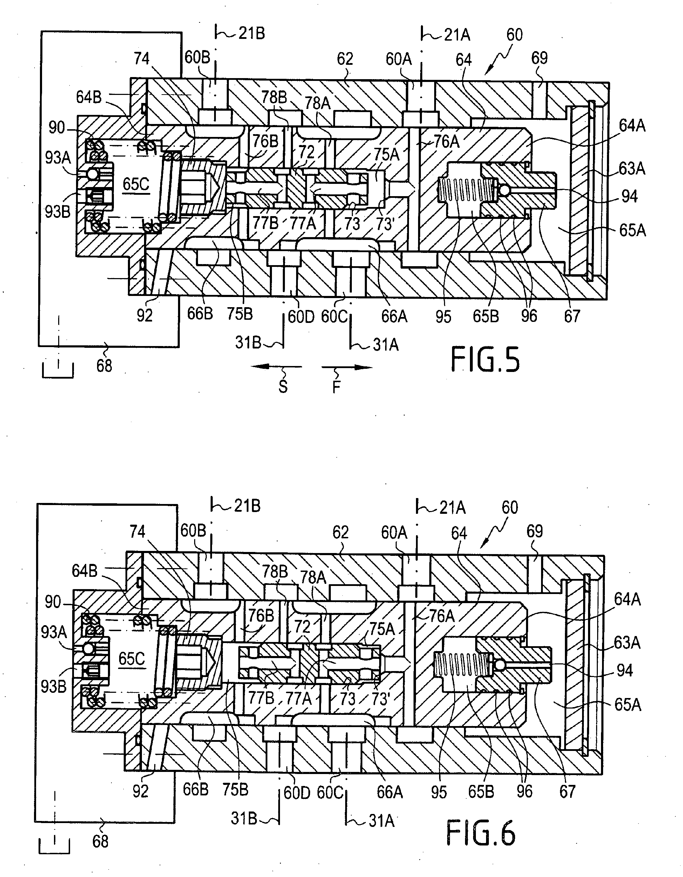

On décrit maintenant les figures 3 à 6 qui montrent, dans quatre situations différentes, un exemple de réalisation pour le sélecteur 60 de la figure 2. Le sélecteur comprend un corps 62 avec un alésage interne 63 dans lequel est disposé un tiroir 64. Les voies 60A, 60B, 60C et 60D sont formées par des perçages du corps 62 qui débouchent dans l'alésage 63. En l'espèce, considérés dans le sens de déplacement S du tiroir 64 depuis sa première position extrême visible sur la figure 3 vers sa deuxième position extrême visible sur les figures 5 et 6, les perçages 60A, 60C, 60D et 60B s'ouvrent successivement dans l'alésage sensiblement à équidistance. Le tiroir 64 présente deux gorges, respectivement 66A et 66B, disposées sur sa périphérie externe axiale.

Comme on l'a indiqué précédemment, le sélecteur 60 comprend une navette 70 de sélection de la basse pression. Cette navette comprend un tiroir-navette 72 disposé dans un alésage axial 73 du tiroir 64. Un bouchon 74 vissé ou fixé par tout autre moyen approprié à une extrémité de l'alésage 73 délimite la course du tiroir 72, du côté opposé au fond 73' de l'alésage 73. Une première chambre de commande 75A est délimitée à une première extrémité du tiroir 72, du côté du fond 73' de l'alésage 73. Cette première chambre de commande communique avec un perçage 76A du tiroir 64 pour pouvoir être mise en communication avec la première voie 60A du sélecteur 60 comme on le voit en particulier sur les figures 5 et 6. Une deuxième chambre de commande 75B est délimitée à l'autre extrémité du tiroir 72, du côté du bouchon 74. Par un perçage 76B du tiroir 64 qui communique avec la gorge 66B, cette chambre 75B peut être mise en communication avec la deuxième voie 60B et avec la quatrième voie 60D du sélecteur 60, comme on le voit en particulier sur la figure 3.

Le tiroir-navette 72 présente par ailleurs des perçages internes, respectivement un perçage 77A communiquant avec la chambre 75A et un perçage 77B communiquant avec la chambre 75B.

Par ailleurs, le tiroir 64 présente, en plus des perçages qui ont déjà été décrits, un perçage radial 78A qui relie l'alésage 73 à la gorge 66A du tiroir 64 pour pouvoir communiquer avec les voies 60C et 60D du sélecteur 60 comme on le voit sur la figure 6, et un perçage radial 78B qui débouche dans l'alésage 73 entre les perçages 78A et 76B et, sur la périphérie axial du tiroir 64 entre les gorges 66A et 66B.

Ainsi qu'il a été indiqué, le dispositif de sélection selon l'invention comprend avantageusement des moyens de commande du sélecteur permettant une première étape de déplacement rapide entre une position stable initiale et une position correspondant au début de la phase intermédiaire, une étape de déplacement freiné pendant laquelle se déroule la phase intermédiaire.

Les moyens de commande représentés sur les figures 3 à 6 permettent ces étapes rapides et freinées. Plus précisément, les moyens de commande du déplacement du tiroir 64 comprennent une première chambre de commande 65A formée dans l'alésage 63 à une extrémité 64A du tiroir 64, et une deuxième chambre de commande 65B, formée dans une cavité de cette extrémité 64A du tiroir et séparée de la première chambre 65A par un piston de commande 67 disposé dans cette cavité. La première chambre de commande est susceptible d'être raccordée à des premiers moyens de pilotage pour permettre le déplacement de l'ensemble constitué par le tiroir 64 et le piston de commande 67 dans le sens F, selon une première étape de déplacement rapide à l'issue de laquelle le piston de commande 67 se trouve dans une position extrême. La deuxième chambre de commande 65B est susceptible d'être raccordée à des deuxièmes moyens de pilotage pour permettre le déplacement du tiroir par rapport au piston de commande 67 dans le sens F, selon une deuxième étape de déplacement lent. En l'espèce, le sens F est celui dans lequel les moyens de pilotage permettent l'échappement de fluide en dehors des chambres 65A et 65B.

En l'espèce, les moyens de commande comprennent également une troisième chambre de commande 65C pour, avec lesdites première et deuxième chambres de commande, commander le déplacement du tiroir dans les deux sens opposés.

On décrit maintenant le fonctionnement de ces moyens de commande en référence aux figures 3 à 6.

Sur la figure 3, le sélecteur est représenté dans sa première position stable, dans laquelle les première et troisième voies 60A et 60C d'une part et les deuxième et quatrième voies 60B et 60D d'autre part communiquent entre elles deux à deux. Dans cette position, l'extrémité 64A du tiroir 64 est en butée contre le fond 65'A de la chambre 65A, par exemple délimité par une pièce de fermeture 63A disposée à l'extrémité de l'alésage 63. Dans cette situation, le piston de commande 67 est rentré dans sa deuxième chambre de commande 65B. A l'inverse, le volume de la troisième chambre de commande 65C est maximal. Le tiroir 64 est rappelé dans cette première position stable par l'effort de rappel exercé par un ou plusieurs ressorts de rappel 90 qui, en l'espèce, coopèrent avec l'extrémité 64B du tiroir opposée à son extrémité 64A et sont disposés dans la chambre 65C. La chambre 65C est en communication avec une enceinte de fluide sans surpression 68, par des conduits 92, 93A et 93B.

Le conduit 92 permet une circulation sensiblement libre de fluide entre l'enceinte 68 et la chambre 65C. Le conduit 93B permet une circulation dans les deux sens entre l'enceinte 68 et la chambre 65C, mais il comporte une restriction limitant cette circulation. Le conduit 93A comporte un clapet anti-retour permettant une circulation, sensiblement libre, dans un seul sens de circulation, de l'enceinte 68 vers la chambre 65C.

La figure 4. montre le sélecteur 60 dans la position intermédiaire, dans laquelle les voies 60A, 60B, 60C et 60D communiquent entre elles mais de manière restreinte. On voit en effet que la première voie 60A communique avec la troisième voie 60C par une encoche 66'A formée sur un bord de la gorge 66A, que la voie 60C communique avec la voie 60D par une encoche 66"A formée sur l'autre bord de la gorge 66A et que la voie 60D communique avec la voie 60B par une encoche 66'B formée sur un bord de la gorge 66B. Pour permettre le passage de la première position stable de la figure 3 à la position intermédiaire de la figure 4, le tiroir 64A subit une première étape de déplacement rapide dans le sens S, au cours de laquelle la chambre de commande 65A est alimentée en fluide de pilotage par le conduit de pilotage 69, tandis que le fluide peut s'échapper de la chambre 65C de manière libre par le conduit 92. Ce conduit 92 s'ouvre dans l'alésage 63 de telle sorte que son ouverture soit dégagée lorsque le tiroir 64 est dans sa première position stable mais qu'elle soit masquée par la périphérie de ce tiroir lorsque celui-ci est dans sa position intermédiaire. Ainsi, à partir de cette situation, le fluide ne peut s'échapper de la chambre 65C qu'en passant par le conduit 93B pourvu d'une restriction. Ce débit de fluide limité freine le déplacement du tiroir dans le sens S.

On remarque que, sur la figure 4, l'extrémité libre 67A du piston de commande 67 est en butée contre le fond 65'A de la chambre de commande 65. En effet, la chambre 65B a été alimentée lors de l'alimentation de la chambre 65A par un conduit de pilotage 94 pourvu d'un clapet anti-retour, de manière à permettre une circulation sensiblement libre de fluide entre les chambres 65A et 65B, seulement dans le sens allant de la chambre 65A vers la chambre 65B. Ceci a provoqué le déplacement du piston 67 dans le sens de sa sortie de la chambre 65B, jusqu'à ce qu'il vienne en butée contre un circlips ou analogue 65'B. Ce déplacement s'effectue également sous l'effet de rappel d'un ressort 95 disposé dans la chambre 65B.

Sur la figure 5, le sélecteur 60 est dans sa deuxième position stable, et l'on voit que les troisième et quatrième voies 60C et 60D communiquent entre elles par la gorge 66A. Dans la situation représentée, c'est le premier conduit principal qui sert à l'alimentation, de sorte que la voie 60A du sélecteur est à une pression supérieure à celle de la voie 60B. En conséquence, le tiroir-navette 72 est resté dans sa position en butée contre le bouchon 74, dans laquelle sa périphérie externe obture le perçage 78A de manière à isoler la première voie 60A de la gorge 66A, et donc des troisième et quatrième voies 60C, 60D, bien que la première voie 60A communique avec la chambre 75A par le conduit 76A.

Dans cette position du tiroir-navette 72, le perçage 77B de ce dernier communique avec le perçage 78B du tiroir 64 et donc avec la quatrième voie 60D. Dans la mesure où, par ailleurs, le perçage 77B est mis en communication avec la deuxième voie 60B du sélecteur par la gorge 66B, le perçage 76B et la chambre 75B, la deuxième voie 60B communique alors avec les troisième et quatrième voies 60C et 60D qui sont reliées par la gorge 66A.

Pour parvenir dans la position de la figure 5 à partir de celle de la figure 4, le tiroir 64 du sélecteur a subi une étape de déplacement lent. En effet, l'alimentation en fluide de la chambre 65A par le conduit de pilotage 69 a continué mais l'échappement de fluide en dehors de la chambre 65C n'a été possible que par la restriction du passage 93B.

Sur la figure 6, le tiroir 64 est dans même position que sur la figure 5 mais le tiroir-navette 72 est dans une position différente. En effet, sur la figure 6, c'est le deuxième conduit principal 21B qui est à la haute pression, de sorte que la deuxième voie 60B du sélecteur 60 est à une pression supérieure à celle de la première voie 60A. Dans ce cas, les troisième et quatrième voies 60C et 60D communiquent entre elles comme sur la figure 5, mais c'est avec la première voie 60A et non plus avec la deuxième voie 60B qu'elles communiquent. En effet, la pression élevée à la deuxième voie 60B a alimenté la chambre 75B par la gorge 66B et le perçage 77B de manière à repousser le tiroir-navette 72 vers l'extrémité 73' de l'alésage 73 opposée au bouchon 74. Dans cette situation, le perçage 78B qui est en communication avec la quatrième voie 60D du sélecteur est obturé par la périphérie externe du tiroir-navette 72. La gorge 66B étant par ailleurs isolée de la quatrième voie 60D par la périphérie externe du tiroir 64, la deuxième voie 60B est isolée des trois autres voies du sélecteur. En revanche, la première voie 60A communique avec la troisième voie 60C par le perçage 76A du tiroir 64, la chambre 75A, le perçage 77A du tiroir-navette 72, le perçage 78A du tiroir 64 et la gorge 66A.

Pour commander le déplacement du tiroir 64 de sa deuxième position stable représentée à la figure 5 ou à la figure 6 jusqu'à sa première position stable représentée à la figure 3, on permet que le fluide s'échappe de la première chambre de commande 65A, par exemple en raccordant le conduit de pilotage 69 à un réservoir sans surpression. En revanche, le déplacement du tiroir 64 dans le sens F est sollicité par l'effort exercé par les ressorts 90. Le tiroir subit alors une première étape de déplacement rapide. En effet, l'échappement de fluide en dehors de la chambre 65A s'effectue de manière libre par le conduit de pilotage 69. Le tiroir 65 parvent donc rapidement dans sa position intermédiaire représentée sur la figure 4. A partir de cette situation, le déplacement de ce tiroir dans le sens F ne peut continuer que si le volume de la chambre de commande 65B diminue suffisamment. Toutefois, le clapet anti-retour disposé dans le conduit 94 ne permet pas l'échappement de fluide. Cet échappement est seulement rendu possible par un conduit d'échappement restreint, formé par exemple par une gorge hélicoïdale 96 ménagée à la périphérie externe du piston de commande 67. Cet échappement étant restreint, le volume de la chambre 65B diminue lentement, de sorte que le déplacement du tiroir 64 vers sa première position stable de la figure 3 est freiné.

Les moyens de commande qui viennent d'être décrits sont un exemple avantageux de réalisation. Bien entendu, d'autres moyens de commande hydrauliques peuvent être utilisés, par exemple les moyens du type décrit dans le brevet EP 1 058 002 qui, bien qu'il concerne un contexte différent de celui de la présente invention, décrit des moyens de commande qui peuvent être utilisés pour sa mise en oeuvre.

De même, la communication restreinte dans la phase intermédiaire opérée par les encoches 66'A, 66"A, 66'B des bords des gorges 66A et 66B fait que la section des liaisons restreintes varie pendant la phase intermédiaire. De manière générale, on peut prévoir que la section de la ou les liaisons restreintes varie pendant la phase intermédiaire.

On peut en revanche préférer que la section de la ou les liaisons restreintes reste sensiblement constante pendant la phase intermédiaire, par exemple en faisant en sorte que ces liaisons restreintes s'opèrent par des perçages de configuration et de disposition particulières, comme décrit dans EP 1 058 002.

De même, les passages permettant ces liaisons restreintes peuvent présenter plusieurs parties, par exemple une première partie permettant un débit de fluide sensiblement libre et une deuxième partie restreinte.

Comme indiqué précédemment, on peut toutefois utiliser tout type de moyens convenables, en particulier des moyens électroniques.

Ainsi, avantageusement, le dispositif comprend des moyens de commande d'un déplacement du sélecteur entre ces positions stables dans lequel la situation provisoire existe qui sont aptes à asservir une variable représentative du fonctionnement du véhicule selon une consigne à l'aide d'un déplacement commandé du sélecteur.

Par exemple, la variable représentative est déterminée à partir d'au moins l'un des paramètres constitués par la pression dans au moins l'un des conduits principaux, le débit dans au moins l'un des conduits principaux, le couple de sortie d'au moins l'un des moteurs, la vitesse de sortie d'au moins l'un des moteurs, la vitesse du véhicule, la position par rapport à une cible, la distance par rapport à une cible, l'accélération ou la décélération du véhicule, l'accélération ou la décélération d'au moins l'un des moteurs, un paramètre de fonctionnement de la pompe, la puissance consommée ou fournie par la pompe ou par son moteur d'entraînement, un paramètre de fonctionnement d'un moteur annexe entraînant cette pompe et un paramètre de fonctionnement d'un outil alimenté hydrauliquement à partir du circuit, en particulier à partir de la pompe de gavage.

Plus généralement, cette variable asservie peut être un paramètre de fonctionnement de la transmission ou d'un organe quelconque du véhicule, cette variable étant estimée représentative en fonction des conditions d'exploitation du véhicule.

Pour l'asservissement, une consigne pour la variable asservie est donnée, et le déplacement du tiroir du sélecteur est commandé de telle sorte que la variable asservie, dont la valeur est mesurée régulièrement s'approche de la valeur cible ou connaisse l'évolution souhaitée.

La variable représentative asservie peut être déterminée directement ou à partir d'un paramètre critique qui est mesurée. Dans ce cas, les moyens de commande du déplacement du sélecteur comprennent des moyens de commande électroniques et le dispositif de sélection de la cylindrée globale comprend des moyens pour mesurer la valeur d'au moins un paramètre critique, calculer la valeur de la variable représentative à partir de cette valeur mesurée, et pour commander le déplacement du sélecteur de l'une vers l'autre de ces positions stables en fonction de la valeur de la variable représentative calculée.

De manière générale, tout moyen de commande de type connu, en particulier ceux qui sont décrits dans EP 1 058 002 peuvent être utilisés.

Lorsqu'on utilise un asservissement, le dispositif comprend avantageusement une unité de gestion électronique (ECU) apte à recevoir la valeur détectée pour le paramètre représentatif, à déterminer la valeur actuelle de la variable asservie, soit directement à partir de ce paramètre, soit par un calcul, à comparer cette valeur à celle de la consigne qui a été lue, calculée ou mémorisée, et émettre en conséquence un signal de commande au tiroir du sélecteur.

Avantageusement, l'asservissement comprend un système de régulation du type PID pour émettre le signal de commande.

De préférence, la consigne est une loi de variation pour la variable asservie. Cette consigne peut être déterminée par un actionneur commandé par un opérateur (pédale, levier...).

Le dispositif peut comporter des moyens de mémorisation d'au moins deux voies de variation pour la variable asservie.

En outre, le dispositif peut comprendre des moyens pour, lors d'un asservissement de la position du tiroir du sélecteur, faire varier la cylindrée de la pompe d'alimentation en fluide du circuit et/ou agir sur un organe du véhicule (tel que le moteur d'entraînement de la pompe, un moteur principal thermique ou électrique, des organes de freinage...). Cette modification du fonctionnement a également pour but de limiter l'effet de choc dû à l'augmentation ou à la réduction de la cylindrée globale du circuit.

Avantageusement, le dispositif comprend des moyens pour détecter la valeur d'un paramètre de mise en oeuvre de l'asservissement et pour commander l'asservissement lorsque la valeur détectée atteint une valeur cible. Par exemple, on peut choisir de chercher à limiter l'effet de choc lors du passage d'une petite cylindrée à une grande cylindrée par un freinage dynamique du groupe moteur qui reste actif en petite cylindrée ou du moteur d'entraînement de la pompe et de ne commencer l'asservissement que lorsque l'on constate que ce freinage ne suffit pas à limiter correctement cet effet de choc, par exemple parce que la consigne de freinage a atteint une valeur seuil. La valeur de cette consigne peut être donnée par la position d'un joystick de commande de la translation du véhicule.

Avantageusement, le dispositif comprend des moyens pour détecter la valeur d'un paramètre de changement de la cylindrée globale du circuit et pour commander automatiquement un déplacement du sélecteur dans le sens d'un changement de cylindrée lorsque la valeur détectée atteint une valeur cible. Cette commande peut aller jusqu'à effectivement changer la cylindrée ou non. Par exemple, on peut délibérément placer le sélecteur dans sa position intermédiaire pendant quelque temps pour opérer un freinage ou une accélération hydrostatique, de préférence à l'aide de l'asservissement précédemment décrit.

## Revendications

1. Dispositif de sélection de la cylindrée globale d'un circuit hydraulique comprenant un premier groupe moteur comprenant au moins un premier moteur hydraulique (20, 22) pour l'entraînement d'un premier moyen de déplacement d'un véhicule et un deuxième groupe moteur comprenant au moins un deuxième moteur hydraulique (30, 32) pour l'entraînement d'un deuxième moyen de déplacement du véhicule, lesdits premier et deuxième moyens de déplacement étant situés l'un à la suite de l'autre dans un sens de déplacement du véhicule, le circuit comprenant des premier et deuxième conduits principaux (21A, 21B) pour le premier groupe moteur, ainsi que des troisième et quatrième conduits principaux (31A, 31B) pour le deuxième groupe moteur, les premier et troisième conduits principaux d'une part et les deuxième et quatrième conduits principaux d'autre part étant aptes à être reliés à deux orifices respectifs (12A, 12B) d'une pompe (12) pour l'alimentation et l'échappement des groupes moteurs en parallèle, le dispositif comprenant un sélecteur (40 ; 60) apte à occuper une première position stable (S1 ; S'1) correspondant à une première configuration du dispositif de sélection dans laquelle une liaison respective entre les troisième et quatrième conduits principaux (31A, 31B) et les orifices respectifs (12A, 12B) de la pompe et un isolement entre ces troisième et quatrième conduits sont établis de telle sorte que le deuxième groupe moteur (30, 32) est actif, et à occuper une deuxième position stable (S2 ; S'2) correspondant à une deuxième configuration du dispositif de sélection dans laquelle la liaison de l'un (21B) des premier et deuxième conduits principaux avec les troisième et quatrième conduits principaux (31A, 31B) est établie, de telle sorte que le deuxième groupe moteur (30, 32) est inactif, le sélecteur étant tel que, lors d'un déplacement de ce sélecteur entre lesdites positions stables, il existe une situation provisoire (I ; I') dans laquelle les premier, deuxième, troisième et quatrième conduits principaux sont reliés,
**caractérisé en ce qu'**il comprend des moyens pour, au moins dans un sens de déplacement du sélecteur (40 ; 60) entre ses première et deuxième positions stables (S1, S2 ; S'1, S'2), entretenir pour un laps de temps ladite situation provisoire (I ; I') selon une phase intermédiaire au cours de laquelle une liaison entre les troisième et quatrième conduits principaux et une liaison entre au moins l'un des premier et deuxième conduits principaux et au moins l'un des troisième et quatrième conduits principaux sont restreintes.

2. Dispositif selon la revendication 1, **caractérisé en ce que**, pendant la phase intermédiaire, la liaison entre les troisième et quatrième conduits principaux et la liaison entre au moins l'un des premier et deuxième conduits principaux et au moins l'un des troisième et quatrième conduits principaux présentent des sections restreintes (R1, R2) différentes.

3. Dispositif selon la revendications 1 ou 2, **caractérisé en ce que** la section de la ou les liaisons restreintes reste sensiblement constante pendant la phase intermédiaire.

4. Dispositif selon la revendication 1 ou 2, **caractérisé en ce que** la section de la ou les liaisons restreintes varie pendant la phase intermédiaire.

5. Dispositif selon l'une quelconque des revendications 1 à 4, **caractérisé en ce que** le sélecteur (40 ; 60) est une valve à au moins trois voies, comprenant une première, une deuxième et une troisième voie (40A, 40B, 40C ; 60A, 60B, 60C), respectivement reliées au premier, au deuxième et au troisième conduit principal (21A, 21B, 31A), et **en ce que** le dispositif comprend des moyens (15B) pour relier le deuxième et le quatrième conduit principal (21B, 31B), les premier et deuxième conduits principaux étant respectivement reliés au premier et au deuxième orifices de la pompe.

6. Dispositif selon la revendication 5, **caractérisé en ce que** le quatrième conduit principal (31B) et le deuxième conduit principal (21B) sont reliés par une conduite de liaison (15B) externe au sélecteur (40) et **en ce que**, dans la première position stable du sélecteur, les première et troisième voies sont reliés en étant isolées de la deuxième voie, dans la deuxième position stable (S2) du sélecteur, les deuxième et troisième voies (40B, 40C) sont reliées en étant isolées de la première voie (40A), tandis que, dans la situation provisoire (I), les première et troisième voies (40A, 40C) sont reliées et les deuxième et troisième voies (40B, 40C) sont reliées.

7. Dispositif selon la revendication 5, **caractérisé en ce que** la valve (60) présente une quatrième voie (60D) reliée au quatrième conduit principal (31B) et **en ce que**, dans la première position stable (S'1) du sélecteur, les première et troisième voies (60A, 60C) d'une part, et les deuxième et quatrième voies (60B, 60D) d'autre part, sont reliées deux à deux, dans la deuxième position stable (S'2) du sélecteur, les troisième et quatrième voies (60C, 60D) sont reliées entre elles et à l'une des première et deuxième voies (60A, 60B) en étant isolées de l'autre des première et deuxième voies, tandis que, dans la situation provisoire (I'), les première et troisième voies (60A, 60C) sont reliées par un premier passage (11) présentant une première restriction, les deuxième et quatrième voies (60B, 60D) sont reliées par un deuxième passage (12) présentant une deuxième restriction et un passage supplémentaire (13) présentant une restriction supplémentaire existe entre la première et la deuxième voie ou entre la troisième et la quatrième voie.

8. Dispositif selon l'une quelconque des revendications 1, 2, 3, 4, 5 et 7, **caractérisé en ce que**, dans la deuxième position stable (S'2), le sélecteur (60) permet de relier celui des premier et deuxième conduits principaux (21A, 21B) qui est à la plus basse pression avec les troisième et quatrième conduits principaux (31A, 31B).

9. Dispositif selon la revendication 8, **caractérisé en ce que** le sélecteur est une valve qui comprend une première, une deuxième, une troisième et une quatrième voie (60A, 60B, 60C, 60D), respectivement reliées au premier, au deuxième, au troisième et au quatrième conduit principal (21A, 21B, 31A, 31B), et **en ce que** cette valve comprend une navette (70) apte, dans la deuxième position stable (S'2) dudit sélecteur, à mettre les troisième et quatrième voies (60C, 60D) en communication avec celle des première et deuxième voie (60A, 60B) qui est à la plus basse pression.

10. Dispositif selon l'une quelconque des revendications 1 à 9, **caractérisé en ce qu'**il comprend des moyens (65A, 65B, 65C, 67) de commande d'un déplacement du sélecteur entre lesdites positions stables dans lequel ladite situation provisoire existe aptes à commander une première étape de déplacement rapide entre la position stable initiale du sélecteur (60) et une position correspondant au début de la phase intermédiaire et une étape de déplacement freiné pendant laquelle se déroule la phase intermédiaire.

11. Dispositif selon la revendication 10, **caractérisé en ce que** les moyens de commande (65A, 65B, 65C, 67) sont aptes à commander, en outre; une deuxième étape de déplacement rapide vers l'autre position stable, à l'issue de la phase intermédiaire.

12. Dispositif selon l'une quelconque des revendications 1 à 11, **caractérisé en ce que** le sélecteur est une valve (40) comprenant un tiroir (64) mobile dans un alésage (63), le tiroir étant apte à occuper deux positions opposées correspondant respectivement à la première et à la deuxième position stable (S1, S2) du sélecteur et, au cours de son déplacement entre ces deux positions opposées, à occuper une position intermédiaire correspondant à ladite situation provisoire (I).

13. Dispositif selon la revendication 12, **caractérisé en ce que** les moyens de commande du déplacement du tiroir (64) comprennent une première chambre de commande (65A) formée dans l'alésage (63), à une extrémité (64A) du tiroir (64) et une deuxième chambre de commande (65B), formée dans une cavité de cette extrémité du tiroir et séparée de la première chambre par un piston de commande (67) disposé dans cette cavité, la première chambre de commande (65A) étant susceptible d'être raccordée à des premiers moyens de pilotage (69) pour permettre le déplacement de l'ensemble constitué par le tiroir et le piston de commande dans un premier sens (F), selon une première étape de déplacement rapide, à l'issue de laquelle le piston de commande (67) se trouve dans une position extrême, et la deuxième chambre de commande (65B) étant susceptible d'être raccordée à des deuxièmes moyens de pilotage pour permettre le déplacement du tiroir par rapport au piston de commande, dans le premier sens, selon une deuxième étape de déplacement lent.

14. Dispositif selon la revendication 13, **caractérisé en ce que** les moyens de commande du déplacement du tiroir comprennent une troisième chambre de commande (65C) pour, avec lesdites première et deuxième chambres de commande, commander le déplacement du tiroir dans deux sens opposés.

15. Dispositif selon l'une quelconque des revendications 1 à 12, **caractérisé en ce qu'**il comprend des moyens de commande d'un déplacement du sélecteur entre lesdites positions stables dans lequel ladite situation provisoire existe aptes à asservir une variable représentative du fonctionnement du véhicule selon une consigne à l'aide d'un déplacement commandé du sélecteur.

16. Dispositif selon la revendication 15, **caractérisé en ce que** la variable représentative est déterminée à partir d'au moins l'un des paramètres constitués par la pression dans au moins l'un des conduits principaux, le débit dans au moins l'un des conduits principaux, le couple de sortie d'au moins l'un des moteurs, le nombre de tours de la sortie d'au moins l'un des moteurs, la vitesse du véhicule, la position par rapport à une cible, la distance par rapport à une cible, l'accélération ou la décélération du véhicule, l'accélération ou la décélération d'au moins l'un des moteurs, un paramètre de fonctionnement de la pompe, la puissance consommée, un paramètre de fonctionnement d'un moteur annexe entraînant cette pompe et un paramètre de fonctionnement d'un outil alimenté hydrauliquement à partir du circuit.

17. Dispositif selon l'une quelconque des revendications 1 à 12, 15 et 16, **caractérisé en ce que** les moyens de commande du déplacement du sélecteur comprennent des moyens de commande électroniques et **en ce qu'**il comprend des moyens pour mesurer la valeur d'au moins un paramètre critique, calculer la valeur de la variable représentative et pour commander le déplacement du sélecteur de l'une vers l'autre des ses positions stables en fonction de la valeur de la variable représentative calculée.

18. Circuit hydraulique comprenant un premier groupe moteur comprenant au moins un premier moteur hydraulique (20, 22) pour l'entraînement d'un premier moyen de déplacement d'un véhicule et un deuxième groupe moteur (30, 32) comprenant au moins un deuxième moteur hydraulique pour l'entraînement d'un deuxième moyen de déplacement du véhicule, lesdits premier et deuxième moyens de déplacement étant situés l'un à la suite de l'autre dans un sens de déplacement du véhicule, le circuit comprenant des premier et deuxième conduits principaux (21A, 21B) pour le premier groupe moteur, ainsi que des troisième et quatrième conduits principaux (31A, 31B) pour le deuxième groupe moteur, lesdits premier et troisième conduits principaux d'une part et les deuxième et quatrième conduits principaux d'autre part étant aptes à être reliés à deux orifices respectifs (12A, 12B) d'une pompe (12) pour l'alimentation et l'échappement des groupes moteurs en parallèle,
**caractérisé en ce qu'**il comporte un dispositif (40, 60) de sélection de la cylindrée globale du circuit selon l'une quelconque des revendications 1 à 17.

19. Circuit hydraulique selon la revendication 18, **caractérisé en ce qu'**il comprend, en outre, un dispositif d'échange (80) ayant un sélecteur d'échange (82) qui présente deux voies d'entrée (82A, 82B) respectivement reliées au premier et au quatrième conduits principaux (21A, 31B) et une voie de sortie (82C) à laquelle celle desdites voies d'entrée qui est à la plus basse pression est apte à être reliée.

## Claims

1. A device for selecting the overall cubic capacity of a hydraulic circuit comprising a first motor set comprising at least one first hydraulic motor (20, 22) for driving first vehicle-moving means for moving a vehicle, and a second motor set comprising at least one second hydraulic motor (30, 32) for driving second vehicle-moving means for moving the vehicle, said first and second vehicle-moving means being situated one behind the other in a direction in which the vehicle moves, the circuit further comprising first and second main ducts (21A, 21B) for the first motor set, and third and fourth main ducts (31A, 31B) for the second motor set, the first and third main ducts, on the one hand, and the second and fourth main ducts, on the other hand, being suitable for being connected to respective ones of two orifices (12A, 12B) of a pump (12) for feeding and discharging the motor sets in parallel, the device comprising a selector (40; 60) suitable for taking up a first stable position (S1; S'1) corresponding to a first configuration of the selector device, in which configuration the third and fourth main ducts (31A, 31B) are connected to respective ones of the orifices (12A, 12B) of the pump, and said third and fourth ducts are isolated from each other so that the second motor set (30, 32) is active, and for taking up a second stable position (S2; S'2) corresponding to a second configuration of the selector device, in which configuration one (21B) of the first and second main ducts is connected to the third and fourth main ducts (31A, 31B), so that the second motor set (30, 32) is inactive, the selector being such that, while the selector is moving between said stable positions, a temporary situation (I; I') exists in which the first, second, third, and fourth ducts are interconnected;
said device being **characterized in that** it comprises means serving, at least while the selector (40; 60) is moving in a first direction between its first and second stable positions (S1, S2; S'1, S'2), to sustain said temporary situation (I; I') for a period of time in an intermediate stage during which an interconnection between the third and fourth main ducts and an interconnection between at least one of the first and second main ducts and at least one of the third and fourth main ducts are constricted.

2. A device according to claim 1, **characterized in that,** during the intermediate stage, the interconnection between the third and fourth main ducts and the interconnection between at least one of the first and second main ducts and at least one of the third and fourth main ducts have constricted cross-sections (R1, R2) that are different.

3. A device according claim 1 or claim 2, **characterized in that** cross-section(s) of the constricted interconnection(s) remain(s) substantially constant during the intermediate stage.

4. A device according to claim 1 or claim 2, **characterized in that** the cross-section(s) of the constricted interconnection(s) vary(ies) during the intermediate stage.

5. A device according to any one of claims 1 to 4, **characterized in that** the selector (40; 60) is a valve having at least three ports, comprising first, second, and third ports (40A, 40B, 40BC; 60A, 60B, 60C) connected respectively to the first, to the second, and to the third main ducts (21A, 21B, 31A), and **in that** the device comprises means (15B) for interconnecting the second and the fourth main duct (21B, 31B), the first and second main ducts being respectively connected to the first and to the second orifices of the pump.

6. A device according to claim 5, **characterized in that** the fourth main duct (31B) and the second main duct (21B) are interconnected via an interconnection duct (15B) that is external to the selector (40), and **in that**, when the selector is in the first stable position, the first and third ports are interconnected while being isolated from the second port, and, when the selector is in the second stable position (S2), the second and third ports (40B, 40C) are interconnected while being isolated from the first port (40A), whereas, in the temporary situation (I), the first and second ports (40A, 40C) are interconnected and the second and third ports (40B, 40C) are interconnected.

7. A device according to claim 5, **characterized in that** the valve (60) has a fourth port (60D) connected to the fourth main duct (31B) and **in that**, when the selector is in the first stable position (S'1), the first and second ports (60A, 60C), on the one hand, and the second and fourth ports (60B, 60D), on the other hand, are interconnected in respective pairs, and, when the selector is in the second stable position (S'2), the third and fourth ports (60C, 60D) are interconnected and are connected to one of the first and second ports (60A, 60B) while being isolated from the other of the first and second ports, whereas, in the temporary situation (I'), the first and second ports (60A, 60C) are connected via a first passage (ℓ1) having a first constriction, the second and fourth ports (60B, 60D) are interconnected via a second passage (ℓ2) having a second constriction, and an additional passage (ℓ3) having an additional constriction exists between the first and second ports or between the third and fourth ports.

8. A device according to any one of claims 1, 2, 3, 4, 5, and 7, **characterized in that,** when in its second stable position (S'2), the selector (60) makes it possible to connect that one of the first and second main ducts (21A, 21B) that is at the lower pressure to the third and fourth main ducts (31A, 31B).

9. A device according to claim 8, **characterized in that** the selector is a valve that has first, second, third, and fourth ports (60A, 60B, 60C, 60D), connected to respective ones of the first, second, third, and fourth main ducts (21A, 21B, 31A, 31B), and **in that** said valve has a shuttle (70) suitable, when said selector is in the second stable position (S'2), for putting the third and fourth ports (60C, 60D) into communication with that one of the first and second ports (60A, 60B) that is at the lower pressure.

10. A device according to any one of claims 1 to 9, **characterized in that** it further comprises means (65A, 65B, 65C, 67) for causing the selector to move between said stable positions, during which movement said temporary situation exists, which control means are suitable for causing a fast movement first step to take place between the initial stable position of the selector (60) and a position corresponding to the beginning of the intermediate stage, and for causing a braked movement step to take place during which the intermediate stage takes place.

11. A device according to claim 10, **characterized in that** the control means (65A, 65B, 65C, 67) are also suitable for causing a fast movement second step to take place towards the other stable position, at the end of the intermediate stage.

12. A device according to any one of claims 1 to 11, **characterized in that** the selector is a valve (40) comprising a slide (64) mounted to move in a bore (63), the slide being suitable for taking up two opposite positions corresponding to respective ones of the first and second stable positions( S1, S2) of the selector, and, while it is moving between these two opposite positions, being suitable for taking up an intermediate position corresponding to said temporary situation (I).

13. A device according to claim 12, **characterized in that** the control means for causing the slide (64) to move comprise a first control chamber (65A) formed in the bore (63), at one end (64A) of the slide (64), and a second control chamber (65B) formed in a cavity in said end of the slide and separated from the first chamber by a control piston (67) disposed in said cavity, the first control chamber (65A) being suitable for being connected to first command means (69) so as to enable the assembly made up of the slide and of the control piston to move in a first direction (F) in a fast movement first step at the end of which the control piston (67) finds itself in an end position, and the second control chamber (65B) being suitable for being connected to second command means so as to enable the slide to move relative to the control piston in the first direction, in a slow movement second step.

14. A device according to claim 13, **characterized in that** the control means for causing the slide to move further comprise a third control chamber (65C) for acting with said first and second control chambers to cause the slide to move in two opposite directions.

15. A device according to any one of claims 1 to 12, **characterized in that** it comprises means for causing the selector to move between said stable positions, during which movement said temporary situation exists, which means are suitable for servo-controlling a variable that is representative of operation of the vehicle to a set point by causing the selector to move in controlled manner.

16. A device according to claim 15, **characterized in that** the representative variable is determined on the basis of at least one of the parameters constituted by the pressure in at least one of the main ducts, the flow rate in at least one of the main ducts, the output torque of at least one of the motors, the number of revolutions at the outlet of at least one of the motors, the speed of the vehicle, position relative to a target, distance relative to a target, the acceleration or the deceleration of the vehicle, the acceleration or the deceleration of at least one of the motors, an operating parameter of the pump, the power being consumed, an operating parameter of an auxiliary motor driving said pump, and an operating parameter of a tool fed hydraulically from the circuit.

17. A device according to any one of claims 1 to 12, 15, and 16, **characterized in that** the control means for causing the selector to move further comprise electronic control means, and **in that** said device comprises means for measuring the value of at least one critical parameter, for computing the value of the representative variable, and for causing the selector to move from one to the other of its stable positions as a function of the value of the computed representative variable.

18. A hydraulic circuit comprising a first motor set comprising at least one first hydraulic motor (20, 22) for driving first vehicle-moving means for moving a vehicle, and a second motor set (30, 32) comprising at least one second hydraulic motor for driving second vehicle-moving means for moving the vehicle, said first and second vehicle-moving means being situated one behind the other in a direction in which the vehicle moves, the circuit comprising first and second main ducts (21A, 21B) for the first motor set, and third and fourth main ducts (31A, 31B) for the second motor set, the first and third main ducts, on the one hand, and the second and fourth main ducts, on the other hand, being suitable for being connected to respective ones of two orifices (12A, 12B) of a pump (12) for feeding and discharging the motor sets in parallel;
said hydraulic circuit being **characterized in that** it comprises a selector device (40, 60) according to any one of claims 1 to 17 for selecting the overall cubic capacity of the circuit.

19. A hydraulic circuit according to claim 18, **characterized in that** it further comprises an exchange device (80) having an exchange selector (82) which has two inlet ports (82A, 82B) connected to respective ones of the first and fourth main ducts (21A, 31B), and an outlet port (82C) to which that one of said inlet ports that is at the lower pressure is suitable for being connected.

## Patentansprüche

1. Vorrichtung zur Auswahl der Gesamtkapazität eines Hydraulikkreises, der ein erstes Antriebsaggregat umfaßt, das mindestens einen ersten Hydraulikmotor (20, 22) zum Antreiben eines ersten Bewegungsmittels eines Fahrzeugs umfaßt, und ein zweites Antriebsaggregat, das mindestens einen zweiten Hydraulikmotor (30, 32) zum Antreiben eines zweiten Bewegungsmittels des Fahrzeugs umfaßt, wobei das erste und zweite Bewegungsmittel in einer Bewegungsrichtung des Fahrzeugs hintereinander angeordnet sind, wobei der Hydraulikkreis eine erste und eine zweite Hauptleitung (21 A, 21 B) für das erste Antriebsaggregat sowie eine dritte und eine vierte Hauptleitung (31 A, 31 B) für das zweite Antriebsaggregat umfaßt, wobei die erste und die dritte Hauptleitung einerseits und die zweite und die vierte Hauptleitung andererseits geeignet sind, mit zwei jeweiligen Öffnungen (12A, 12B) einer Pumpe (12) für die Speisung und den Austritt der Antriebsaggregate im Parallelbetrieb verbunden zu werden, wobei die Vorrichtung einen Selektor (40; 60) umfaßt, der geeignet ist, eine erste stabile Position (S1; S'1) einzunehmen, die einer ersten Konfiguration der Auswahlvorrichtung entspricht, in welcher eine jeweilige Verbindung zwischen der dritten und vierten Hauptleitung (31 A, 31 B) und den jeweiligen Öffnungen (12A, 12B) der Pumpe und eine Isolation zwischen dieser dritten und dieser vierten Leitung hergestellt sind, derart, daß das zweite Antriebsaggregat (30, 32) aktiv ist, und eine zweite stabile Position (S2; S'2) einzunehmen, die einer zweiten Konfiguration der Auswahlvorrichtung entspricht, in welcher die Verbindung einer (21 B) von der ersten und der zweiten Hauptleitung mit der dritten und der vierten Hauptleitung (31 A, 31 B) hergestellt ist, derart, daß das zweite Antriebsaggregat (30, 32) inaktiv ist, wobei der Selektor so beschaffen ist, daß bei einer Bewegung dieses Selektors zwischen den stabilen Positionen eine temporäre Situation (I; I') existiert, in welcher die erste, zweite, dritte und vierte Hauptleitung verbunden sind,
**dadurch gekennzeichnet, daß** sie Mittel umfaßt, um mindestens in einer Bewegungsrichtung des Selektors (40; 60) zwischen seiner ersten und zweiten stabilen Position (S1, S2; S'1, S'2) für eine Zeitspanne die temporäre Situation (I; I') gemäß einer Zwischenphase aufrechtzuerhalten, während der eine Verbindung zwischen der dritten und vierten Hauptleitung und eine Verbindung zwischen mindestens einer von der ersten und der zweiten Hauptleitung und mindestens einer von der dritten und der vierten Hauptleitung gedrosselt sind.

2. Vorrichtung nach Anspruch 1, **dadurch gekennzeichnet, daß** während der Zwischenphase die Verbindung zwischen der dritten und vierten Hauptleitung und die Verbindung zwischen mindestens einer der von der ersten und der zweiten Hauptleitung und mindestens einer der von der dritten und der vierten Hauptleitung unterschiedliche gedrosselte Querschnitte (R1, R2) aufweisen.

3. Vorrichtung nach Anspruch 1 oder 2, **dadurch gekennzeichnet, daß** der Querschnitt der gedrosselten Verbindung oder Verbindungen während der Zwischenphase im wesentlichen konstant bleibt.

4. Vorrichtung nach Anspruch 1 oder 2, **dadurch gekennzeichnet, daß** der Querschnitt der gedrosselten Verbindung oder Verbindungen während der Zwischenphase variiert.

5. Vorrichtung nach einem der Ansprüche 1 bis 4, **dadurch gekennzeichnet, daß** der Selektor (40; 60) ein Ventil mit mindestens drei Wegen ist, das einen ersten, einen zweiten und einen dritten Weg (40A, 40B, 40C; 60A, 60B, 60C) umfaßt, die mit der ersten, mit der zweiten bzw. mit der dritten Hauptleitung (21 A, 21 B, 31 A) verbunden sind, und **dadurch**, daß die Vorrichtung Mittel (15B) zum Verbinden der zweiten und der vierten Hauptleitung (21 B, 31 B) umfaßt, wobei die erste und zweite Hauptleitung mit der ersten bzw. mit der zweiten Öffnung der Pumpe verbunden sind.

6. Vorrichtung nach Anspruch 5, **dadurch gekennzeichnet, daß** die vierte Hauptleitung (31 B) und die zweite Hauptleitung (21 B) durch eine Verbindungsleitung (15B) außerhalb des Selektors (40) verbunden sind, und **dadurch**, daß in der ersten stabilen Position des Selektors der erste und dritte Weg verbunden sind, wobei sie vom zweiten Weg isoliert sind, in der zweiten stabilen Position (S2) des Selektors der zweite und dritte Weg (40B, 40C) verbunden sind, wobei sie vom ersten Weg (40A) isoliert sind, während in der temporären Situation (I) der erste und dritte Weg (40A, 40C) verbunden sind und der zweite und dritte Weg (40B, 40C) verbunden sind.

7. Vorrichtung nach Anspruch 5, **dadurch gekennzeichnet, daß** das Ventil (60) einen vierten Weg (60D) aufweist, der mit der vierten Hauptleitung (31 B) verbunden ist, und **dadurch**, daß in der ersten stabilen Position (S'1) des Selektors der erste und dritte Weg (60A, 60C) einerseits und der zweite und vierte Weg (60B, 60D) andererseits paarweise verbunden sind, in der zweiten stabilen Position (S'2) des Selektors der dritte und vierte Weg (60C, 60D) miteinander und mit einem von dem ersten und dem zweiten Weg (60A, 60B) verbunden sind, wobei sie von dem anderen von dem ersten und dem zweiten Weg isoliert sind, während in der temporären Situation (I') der erste und dritte Weg (60A, 60C) durch einen ersten Durchlaß (I1) verbunden sind, der eine erste Drosselung aufweist, der zweite und vierte Weg (60B, 60D) durch einen zweiten Durchlaß (I2) verbunden sind, der eine zweite Drosselung aufweist, und ein zusätzlicher Durchlaß (I3), der eine zusätzliche Drosselung aufweist, zwischen dem ersten und dem zweiten Weg oder zwischen dem dritten und dem vierten Weg existiert.

8. Vorrichtung nach einem der Ansprüche 1, 2, 3, 4, 5 und 7, **dadurch gekennzeichnet, daß** in der zweiten stabilen Position (S'2) der Selektor (60) ermöglicht, diejenige von der ersten und der zweiten Hauptleitung (21 A, 21 B), welche den niedrigeren Druck aufweist, mit der dritten und vierten Hauptleitung (31 A, 31 B) zu verbinden.

9. Vorrichtung nach Anspruch 8, **dadurch gekennzeichnet, daß** der Selektor ein Ventil ist, das einen ersten, einen zweiten, einen dritten und einen vierten Weg (60A, 60B, 60C, 60D) umfaßt, die mit der ersten, mit der zweiten, mit der dritten bzw. mit der vierten Hauptleitung (21A, 21 B, 31 A, 31 B) verbunden sind, und **dadurch**, daß dieses Ventil einen Schaltkörper (70) umfaßt, der geeignet ist, in der zweiten stabilen Position (S'2) des Selektors den dritten und vierten Weg (60C, 60D) mit demjenigen von dem ersten und dem zweiten Weg (60A, 60B) in Verbindung zu bringen, welcher den niedrigeren Druck aufweist.

10. Vorrichtung nach einem der Ansprüche 1 bis 9, **dadurch gekennzeichnet, daß** sie Mittel (65A, 65B, 65C, 67) zur Steuerung einer Bewegung des Selektors zwischen den stabilen Positionen, bei welcher die temporäre Situation existiert, umfaßt, die geeignet sind, einen ersten Schritt einer schnellen Bewegung zwischen der anfänglichen stabilen Position des Selektors (60) und einer Position, die dem Beginn der Zwischenphase entspricht, und einen Schritt einer gebremsten Bewegung, während welchem die Zwischenphase abläuft, zu steuern.

11. Vorrichtung nach Anspruch 10, **dadurch gekennzeichnet, daß** die Steuerungsmittel (65A, 65B, 65C, 67) geeignet sind, außerdem am Ende der Zwischenphase einen zweiten Schritt einer schnellen Bewegung zu der anderen stabilen Position hin zu steuern.

12. Vorrichtung nach einem der Ansprüche 1 bis 11, **dadurch gekennzeichnet, daß** der Selektor ein Ventil (40) ist, das einen Schieber (64) umfaßt, der in einer Bohrung (63) beweglich ist, wobei der Schieber geeignet ist, zwei einander gegenüberliegende Positionen einzunehmen, die der ersten bzw. der zweiten stabilen Position (S1, S2) des Selektors entsprechen, und im Verlaufe seiner Bewegung zwischen diesen zwei einander gegenüberliegenden Positionen eine Zwischenposition einzunehmen, die der temporären Situation (I) entspricht.

13. Vorrichtung nach Anspruch 12, **dadurch gekennzeichnet, daß** die Mittel zur Steuerung der Bewegung des Schiebers (64) eine erste Steuerkammer (65A), die in der Bohrung (63) an einem Ende (64A) des Schiebers (64) ausgebildet ist, und eine zweite Steuerkammer (65B), die in einem Hohlraum dieses Endes des Schiebers ausgebildet ist und von der ersten Kammer durch einen in diesem Hohlraum angeordneten Steuerkolben (67) getrennt ist, umfassen, wobei die erste Steuerkammer (65A) an erste Vorsteuermittel (69) anschließbar ist, um die Bewegung der von dem Schieber und dem Steuerkolben gebildeten Einheit in einer ersten Richtung (F) gemäß einem ersten Schritt einer schnellen Bewegung zu ermöglichen, an dessen Ende sich der Steuerkolben (67) in einer Endposition befindet, und wobei die zweite Steuerkammer (65B) an zweite Vorsteuermittel anschließbar ist, um die Bewegung des Schiebers bezüglich des Steuerkolbens in der ersten Richtung gemäß einem zweiten Schritt einer langsamen Bewegung zu ermöglichen.

14. Vorrichtung nach Anspruch 13, **dadurch gekennzeichnet, daß** die Mittel zur Steuerung der Bewegung des Schiebers eine dritte Steuerkammer (65C) umfassen, um mit der ersten und der zweiten Steuerkammer die Bewegung des Schiebers in zwei entgegengesetzten Richtungen zu steuern.

15. Vorrichtung nach einem der Ansprüche 1 bis 12, **dadurch gekennzeichnet, daß** sie Mittel zur Steuerung einer Bewegung des Selektors zwischen den stabilen Positionen, bei welcher die temporäre Situation existiert, umfaßt, die geeignet sind, eine für den Betrieb des Fahrzeugs repräsentative Variable mit Hilfe einer gesteuerten Bewegung des Selektors gemäß einem Vorgabewert zu regeln.

16. Vorrichtung nach Anspruch 15, **dadurch gekennzeichnet, daß** die repräsentative Variable ausgehend von mindestens einem der Parameter bestimmt wird, die aus dem Druck in mindestens einer der Hauptleitungen, der Durchflußmenge in mindestens einer der Hauptleitungen, dem Ausgangsdrehmoment mindestens eines der Motoren, der Abtriebsdrehzahl mindestens eines der Motoren, der Geschwindigkeit des Fahrzeugs, der Position bezüglich eines Ziels, der Entfernung bezüglich eines Ziels, der Beschleunigung oder der Verzögerung des Fahrzeugs, der Beschleunigung oder der Verzögerung mindestens eines der Motoren, einem Betriebsparameter der Pumpe, der Leistungsaufnahme, einem Betriebsparameter eines Hilfsmotors, der diese Pumpe antreibt, und einem Betriebsparameter eines Werkzeugs, das aus dem Hydraulikkreis hydraulisch gespeist wird, bestehen.

17. Vorrichtung nach einem der Ansprüche 1 bis 12, 15 und 16, **dadurch gekennzeichnet, daß** die Mittel zur Steuerung der Bewegung des Selektors elektronische Steuerungsmittel umfassen, und **dadurch**, daß sie Mittel zum Messen des Wertes mindestens eines kritischen Parameters, Berechnen des Wertes der repräsentativen Variable und zum Steuern der Bewegung des Selektors von einer stabilen Positionen zur anderen in Abhängigkeit von dem berechneten Wert der repräsentativen Variable umfaßt.

18. Hydraulikkreis, der ein erstes Antriebsaggregat umfaßt, das mindestens einen ersten Hydraulikmotor (20, 22) zum Antreiben eines ersten Bewegungsmittels eines Fahrzeugs umfaßt, und ein zweites Antriebsaggregat (30, 32), das mindestens einen zweiten Hydraulikmotor zum Antreiben eines zweiten Bewegungsmittels des Fahrzeugs umfaßt, wobei das erste und zweite Bewegungsmittel in einer Bewegungsrichtung des Fahrzeugs hintereinander angeordnet sind, wobei der Hydraulikkreis eine erste und eine zweite Hauptleitung (21A, 21 B) für das erste Antriebsaggregat sowie eine dritte und eine vierte Hauptleitung (31 A, 31 B) für das zweite Antriebsaggregat umfaßt, wobei die erste und die dritte Hauptleitung einerseits und die zweite und die vierte Hauptleitung andererseits geeignet sind, mit zwei jeweiligen Öffnungen (12A, 12B) einer Pumpe (12) für die Speisung und den Austritt der Antriebsaggregate im Parallelbetrieb verbunden zu werden,
**dadurch gekennzeichnet, daß** er eine Vorrichtung (40, 60) zur Auswahl der Gesamtkapazität des Hydraulikkreises nach einem der Ansprüche 1 bis 17 aufweist.

19. Hydraulikkreis nach Anspruch 18, **dadurch gekennzeichnet, daß** er außerdem eine Austauschvorrichtung (80) mit einem Austauschselektor (82) umfaßt, welcher zwei Eintrittswege (82A, 82B) aufweist, die mit der ersten bzw. mit der vierten Hauptleitung (21 A, 31B) verbunden sind, und einen Austrittsweg (82C), mit welchem derjenige der Eintrittswege verbindbar ist, welcher den niedrigeren Druck aufweist.
